# EUROPEAN PATENT SPECIFICATION

(11) **EP 2 133 940 B1**
(45) Date of publication and mention of the grant of the patent: **03.08.2011**
(21) Application number: 08425416.8
(22) Date of filing: 12.06.2008
(51) Int. Cl.: H01M 2/12

(54) **Venting plug for stationary batteries, with blast-resistant protection and unlimited, automatic topping-up system, and topping-up assembly employing said plug**
Belüftungsstecker für Stationärbatterien mit Strahlungswiderstandsschutz sowie System zur unbegrenzten automatischen Aufsetzung und Aufsetzbaugruppe mit besagtem Stecker
Bouchon d'aération pour batteries stationnaires, avec protection contre le souffle et système de remplissage illimité automatique, et ensemble de remplissage utilisant ledit bouchon

(43) Date of publication of application: 16.12.2009
(73) Proprietor: T.A.B.A. S.r.l., 26025 PANDINO (Cremona) (IT)
(72) Inventor: Sampellegrini, Angelo, 26025 Pandino (CREMONA) (IT)
(74) Representative: Faggioni, Carlo Maria

(56) References cited:
- EP-A- 0 843 370
- FR-A- 2 311 412
- FR-A- 2 374 748
- US-A- 4 517 261

## Description

The present invention refers to a venting plug for batteries, in particular to a plug with anti-blasting protection.

As known, the batteries of stationary accumulators are fixed installations of electric batteries consisting of lead members immersed in an electrolytic solution. They are intended to supply, for example in case of emergency (typically discontinuation of the mains supply), electric appliances which need a uninterrupted power supply without variations or drops. They are normally employed in auxiliary services of power plant units and substations, in telephone and telegraph exchanges, in emergency light plants for public facilities, in emergency power plants for cableways and freight elevators, for continuous-cycle processes, to supply electronic computers or further to store electric power coming from photovoltaic systems (solar batteries).

A stationary battery of lead accumulators is connected in parallel to the electric mains it supports and consists of electrochemical elements, each having a conventional voltage (typically of about 2V). The number of elements, connected in series, determines the battery voltage value.

Each element may be built with planar or tubular plates. In the first case the plates consist of alloyed lead-antimony grids, with glass-fibre separators supporting the positive active matter and microporous polyethylene diaphragms. In the second case the positive plates are frames made of small pipes, consisting of sheaths containing active matter and permeable to electrolyte; the power is extracted through lead-alloy rheophores inside the tubular electrodes; in this case too the diaphragms between the plates are made of microporous polyethylene.

The electrolyte wherein the plates are immersed consists of a solution of sulphuric acid (density equal to 1.21 - 1.25 dm³ of electrolyte/dm³ of water).

In these accumulators, the free acid fills up to a preset level the hollow body of the element, consisting of a box container, normally made of clear SAN, closed above by a sealed cover and by a screwed-on or pushed-in, or bayonet-style fastened plug. The function of these plugs is also that of allowing the regular outflow of the hydrogen and oxygen released by the electrochemical process within the element.

The battery moreover is also electrically connected on one side to the circuit of the appliance (i.e. to the appliance requiring continuous power supply) and, on the other side, to a power rectifier (device capable of converting alternate current from the mains to continuous current suited to the accumulator characteristics).

If it is connected permanently to the circuit and to the rectifier, the battery is typically kept in buffer, in case it is connected alternately to the user and to the rectifier, the battery is in charging/discharging mode.

In any case, during the charging cycles, the electrolyte overheats and evaporates, releasing hydrogen and oxygen and causing a drop in the level of electrolyte solution.

Therefore, as known, the two-fold need exists to periodically top up the electrolyte level, as well as to manage the release of gases, preventing them from saturating the environment and causing detonation (hydrogen, in particular, is a highly explosive gas).

For such purpose, various plug configurations have already been suggested, which meet this two-fold need.

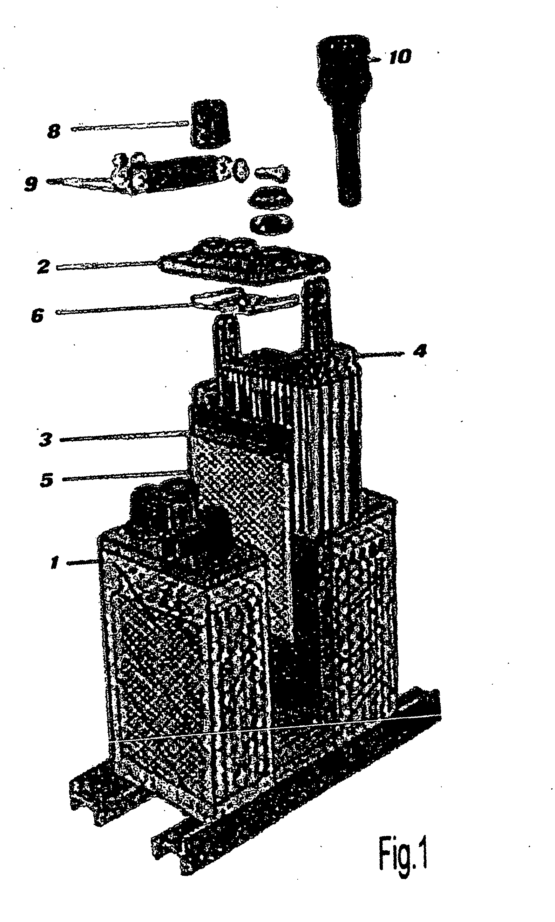

Fig. 1 shows a pair of prior-art accumulator elements, one of which in an exploded view. As clearly shown, each element is defined by a box container 1, generally consisting of clear plastic material whereon the MIN and MAX level is indicated, through screen-printing, within which the electrolyte must remain. Box body 1 is closed above by a coloured plastics lid 2. By reference 3 the negative plate assembly is indicated and by 4 the assembly of positive plates made of small pipes. Between the two assemblies a microporous separator 5 is arranged, while a plastic spray-shield 6 and a pole-covering dome-shaped cap 8 are housed above. Outside the lid, on each pole of the two assemblies of positive and negative plates, an electrical connection 9 is provided, capable of mutually connecting in series the various elements, coated with self-extinguishing material. Finally, in the middle of lid 2, an electrolyte topping-up hole is provided, within which a venting plug 10 compliant with standard DIN40740 is housed, for example model 242TSG manufactured by T.a.b.a. S.r.l.

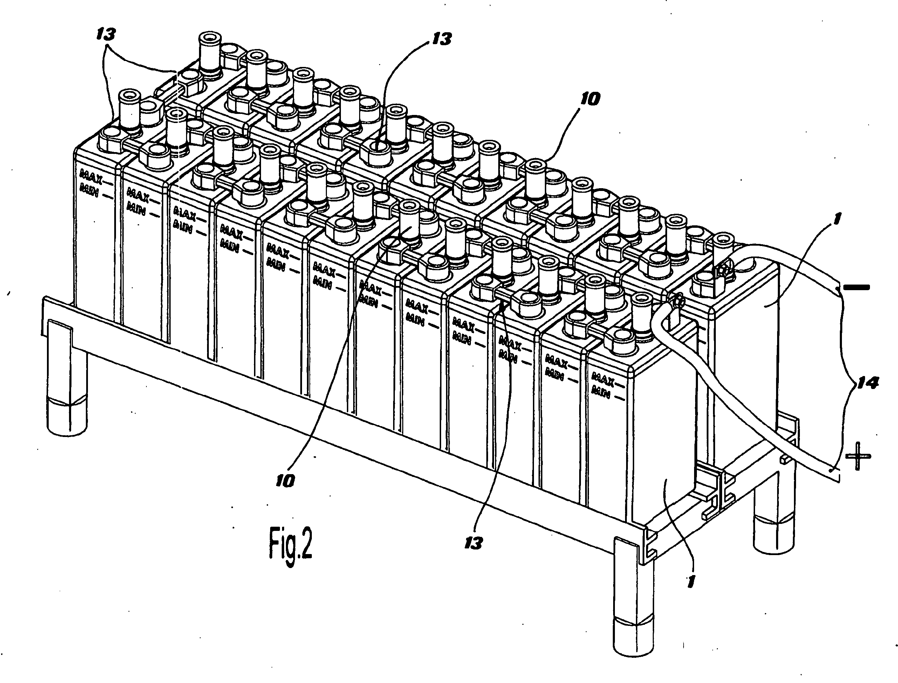

Fig. 2 shows a battery of stationary elements, each of 2V, connected in series to provide an overall voltage of 48V. It consists of 24 elements arranged on two parallel rows.

The connections between the various adjacent elements are established through electric bridges 13 which end, on the two head elements, with two terminal clamps connected to respective outlet cables 14. Such cables are intended to be connected to the current rectifier and in parallel to the electric system whereto electric continuity is guaranteed.

In the respective seats, venting plugs 10 are housed, which are described in detail in the following.

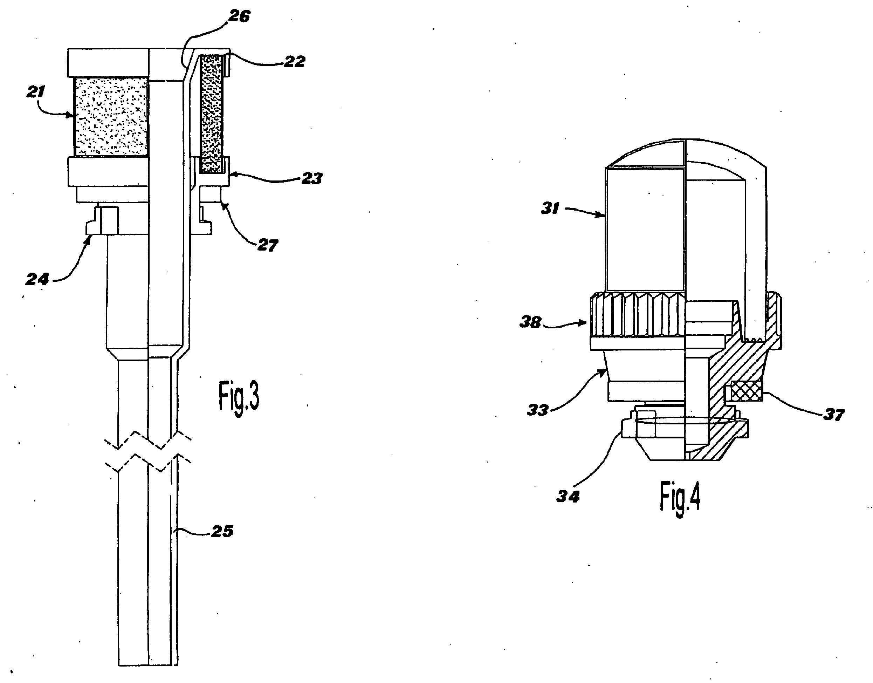

Figs. 3 and 4 show two types of bayonet-type venting plugs with known-type ceramic filter, typically employed on stationary battery elements.

Fig. 3 shows a DIN-compliant plug provided with a cylindrical filter 21 hot pressure welded between an upper plastic lid 22 and a lower base 23 with which a lower crown is integral, provided with a double-bayonet configuration 24. The lid portion 22 houses inside a tubular structure 25, with a funnel mouth 26, for the introduction of distilled water into the accumulator element. In the part below base 23, an annular rubber gasket 27 is provided, intended to accomplish a seal against the lid 2 of element 1 when the plug is tightened within the respective opening by the engagement with bayonet system 24.

Fig. 4 shows another plug with closed dome-shaped ceramic filter 31, wherefrom it takes the name of "dome-shaped plug". Ceramic filter 31 is hot pressure welded on a single plug body 33, itself having a double-bayonet configuration 34 and an annular rubber gasket 37.

Unlike the previous one, the dome-shaped plug provides for plug body 33 to be preferably provided with a locking ring 38, by which it is possible to grip the plug firmly into one's hand to screw it open and closed easily, so as to free the housing seat and accomplish battery top up.

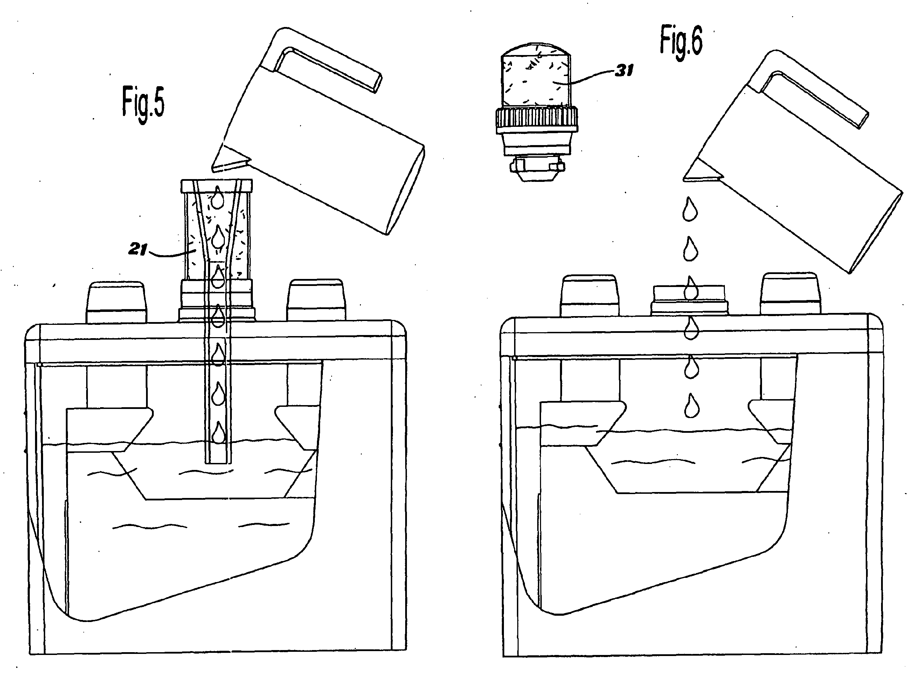

As a matter of fact, the topping up of the battery elements, according to the prior art, is effected as shown in figs. 5 and 6. Fig. 5 shows that the plug with ceramic cylindrical filter 21 has a topping-up pipe 25 which drops to below the minimum level of the electrolyte: through funnel portion 26, topping up can hence be easily performed by simply pouring distilled water from above. Since pipe 25 remains below the electrolyte level, the gases (in particular hydrogen) released during operation are nevertheless forced to pass through ceramic filter 21. Viceversa, with the dome-shaped plug, there is no free access to the upper part: it is hence necessary to unscrew the plug, acting on locking ring 38, and remove the plug from the element to perform the topping up of the electrolyte (fig. 6).

As can be guessed, topping up is hence an awkward and time-consuming operation (particularly with the dome-shaped plug).

The object of the present invention is hence that of offering a plug with blast-resistant filter, for stationary batteries, which is simple and inexpensive, especially in the assembly thereof and in the mounting thereof on the battery, and which allows to reduce maintenance operations for electrolyte topping up.

Such object is achieved through a device as disclosed in its essential features in the attached main claim.

Other inventive aspects of the invention are disclosed in the dependent claims.

Further features and advantages of the device according to the invention will in any case be more evident from the following detailed description of some sample embodiments, given by way of example and shown in the accompanying drawings, wherein:
fig. 1 is a partly-exploded, perspective view of a pair of exemplary accumulators provided with a prior-art plug;
fig. 2 is a perspective view of a battery of accumulators as in fig. 1;
figs. 3 and 4 are partly-in-section, elevation views of two prior art plugs, with a cylindrical filter and with a dome-shaped filter, respectively;
figs. 5 and 6 are side elevation views, partly showing-through, which show the prior-art topping-up modes with the two plugs of figs. 3 and 4;
fig. 7 is a perspective view of a plug with a dome-shaped filter according to the invention;
fig. 8 is a perspective view of a plug with a cylindrical filter according to the invention;
figs. 9A and 9B are front elevation views, partly in section, of the plug of fig. 8 in two different operational states;
figs. 10, 10A, 11 and 11A are side elevation, top plan, front elevation and bottom plan views, respectively, of the plug of fig. 8;
figs. 12A and 12B are longitudinal-section views in two operational states of the plug of fig. 8;
fig. 13 is a side elevation view of a plug with a dome-shaped filter according to the invention;
figs. 14A-14C are top plan, side elevation and bottom plan views, respectively, of a cup element according to the invention;
fig. 15 is an exploded section view of the cup element of fig. 14B with the relative seals;
fig. 16 is an interrupted, perspective view which shows the way of housing the plug according to the invention;
fig. 17 is a diagrammatic view of a tightening key according to the invention;
figs. 18A and 18B are interrupted perspective views which show the tightening and then plug orientation procedure according to the invention; and
fig. 19 is a perspective view of a battery provided with the topping up assembly according to the invention.

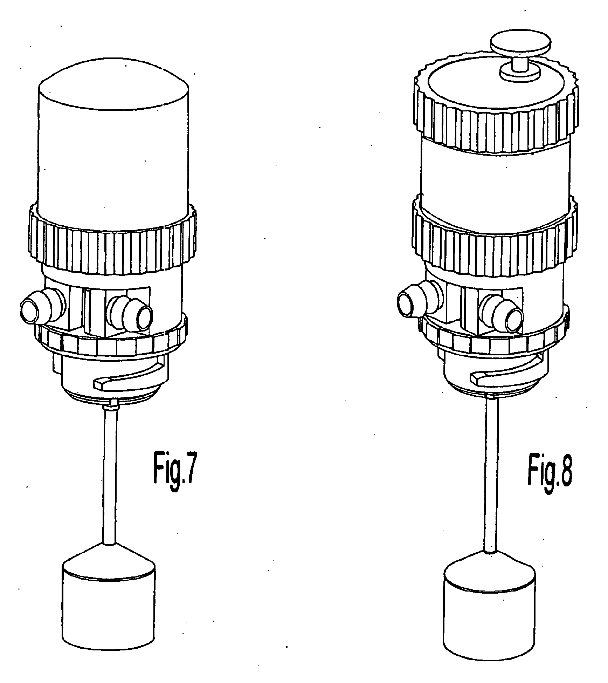

Figs. 7 and 8 show altogether two plugs according to the invention, with dome-shaped filter and with cylindrical filter, respectively.

In the following detailed description it will be understood that, unless differently specified, the materials and the building techniques of the individual components are substantially correspondent to the prior-art ones illustrated above.

A plug with cylindrical filter according to the invention is shown in figs. 8-12.

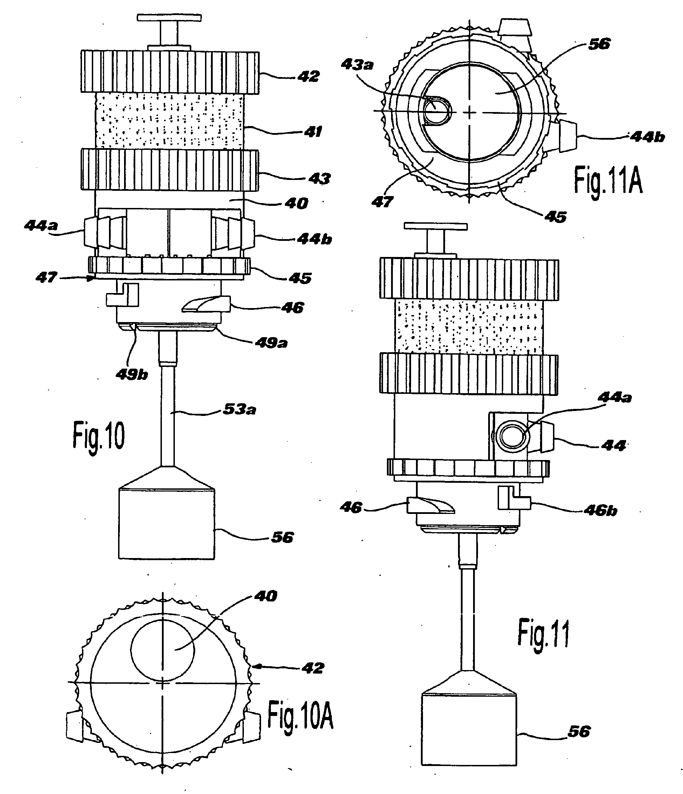

With reference to fig. 10, it is pointed out that the plug comprises a substantially hollow plug body 40, generally made of plastic material, which acts also as a base for filter element 41. Ceramic filter 41 is in the shape of a cylindrical wall which may be made, for example, of two different materials: silicon carbide or corundum, with different granulometric characteristics depending on use requirements. The height of filter 41 may vary, thus determining the area of the porous surface and hence the flow rate of the gases it is capable of disposing.

Cylindrical filter 41 is welded between a cap 42 and a lower flange 43 belonging to plug body 40, both made of plastic material. The welding process occurs under heat and under pressure.

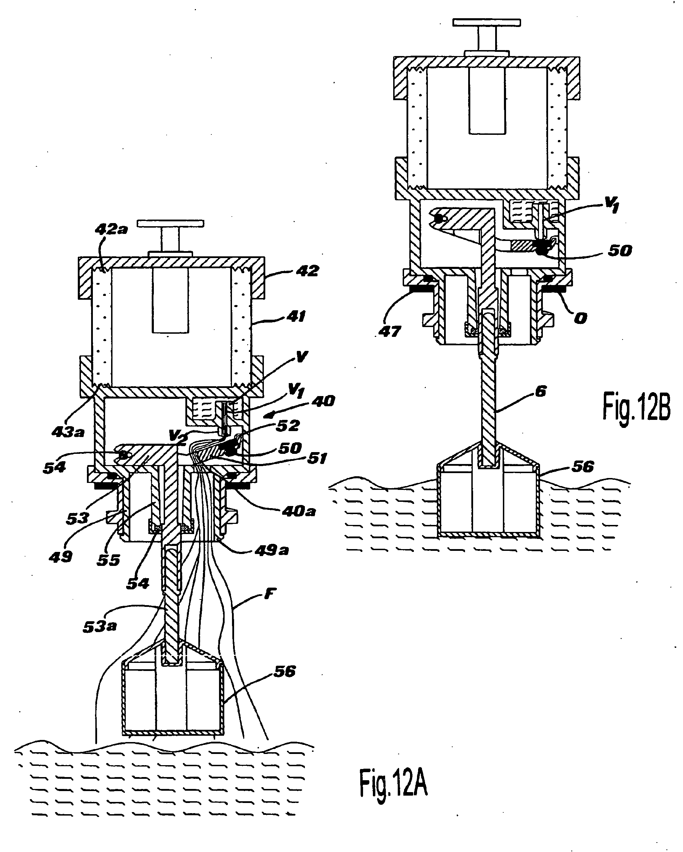

For such purpose, in the inner contact areas of filter 41, cap 42 and flange 43 are advantageously provided with three welding directrices 42a and 43a (figs. 12A and 12B) in the form of concentric, circumferential (triangular-section) ridges. The three circumferential ridges have a diameter ranging between the outer diameter and the inner diameter of ceramic filter 41, and are manufactured by integral moulding with cap 42 and with flange 43.

During pressure welding of parts 42 and 43, with filter 41 in between, directrices 42a and 43a, softened by heat, enter the circular crown base of the filter. Due to the particular shape of the directrices, with a cusp vertex, a perfect welding of the parts is obtained.

Cap 42 and flange 43 have a striped or knurled outer surface which makes the handling of the entire plug more effective.

In the central part of the plug an automatic topping up arrangement of the distilled water is obtained, which is better illustrated in the following.

Inside hollow body 40 a topping up bowl V is obtained, connected to the outside through two orientable connections 44a and 44b.

From bowl V a transfer conduit V₁ departs, which puts in communication bowl V with the underlying cavity of body 40, which further has a delivery opening 40a for the inward flow of the battery element. Preferably, conduit V₁ rises by a short measure from the bottom of bowl V, so that a permanent level of the topping up liquid inside bowl V is established.

Conduit V₁ ends below with an outlet nozzle V₂ intended to be closed by a rubber plug 50 mounted movable on a float system. In particular, rubber 50 is integral with an articulated rod 51 which is constrained in rotation about a hinge 52, or simply a wedge abutment, integral with the wall of body 40. At the opposite end, articulated rod 51 is connected to a fork lever 53 through a shaft/hole coupling 54.

Fork lever 53 is L-shaped, as visible in figs. 12A and 12B, and is guided in a vertical translation motion by a gasket ring 54 mounted at the bottom of a lower sleeve 55 of body 40.

At the lower end of L-shaped lever 53, a small rod 53a is provided, which is made integral with a float 56, intended to float on the electrolyte liquid inside the accumulator element.

During operation, articulated rod 51 receives an upward thrust by lever 53 - in turn pushed upwards by float 56 - which forces it to rotate around hinge or wedge 52. In this rotation movement, articulated rod 51 pushes rubber 50 to close nozzle V₂, so as to prevent the entry of the topping up liquid contained in bowl V₁. The relative size of the components and the mounting position of the plug on the accumulator element are such that, when the electrolyte liquid level is above the minimum desired level, the thrust on the float maintains nozzle V₂ closed (fig. 12B). Viceversa, when the electrolyte level drops below the minimum, float 56 drops and, consequently, rubber 50 moves away from nozzle V₂, opening the outlet of topping-up liquid F (typically distilled water) from bowl V (Fig. 12A).

The lever arm is thus defined to exploit as much as possible the useful room in the plug, transferring onto the closing point of nozzle V₂ a force equal to about 7 times the Archimedean thrust supplied by the electrolyte liquid onto the float.

According to a preferred variant, the plug with cylindrical filter according to the invention is arranged for the introduction of a probe (densimeter, thermometer, or other) to be able for checking the physical conditions of the electrolyte without having to disassemble the plug from its seat.

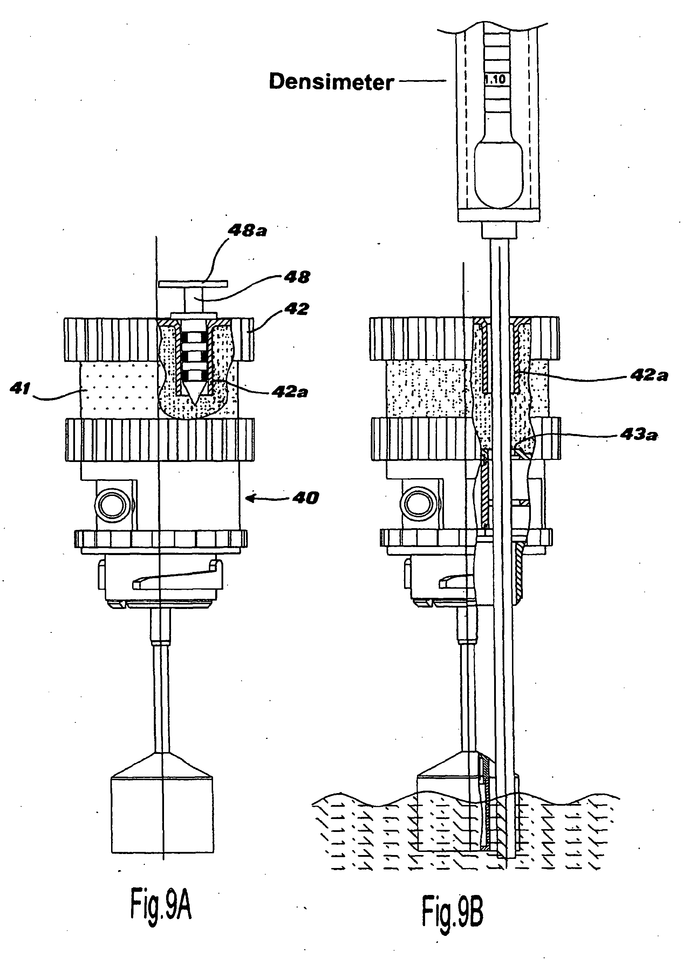

For such purpose, upper cap 42 is provided with a vertical channel 42a (fig. 9B), which runs within cylindrical filter 41 and is aligned with a hole 43a and with an opening in the lower part of body 40 which opens towards the inside of the accumulator element.

In normal operating conditions, conduit 42a is intended to be closed by a closing pin 48, provided with one or more circumferential gaskets and pressure-coupled within conduit 42a.

Should one have to insert the desired probe, for example the densimeter shown in fig. 9B, it is sufficient to remove pin 48 from conduit 42a, by acting on a handle 48a thereof, and to introduce the rectilinear probe which may run entirely across the plug until it descends beyond float 56. In order to limit the radial dimensions of the plug, conduit 42 is arranged at a shorter radial distance from the symmetry axis than the diameter of float 56; said float, however, has a side recess suitable to let the probe pass through, which probe is introduced into the accumulator element.

According to a further preferred variant, plug body 40 is introduced snapwise into a lower cup coupled with the accumulator seat. For such purpose, the lower part of body 40 is shaped as a flexible cylindrical wall 49, for example provided with longitudinal notches 49b. At the mouth of cylindrical wall 49 an annular bevelled relief 49a is provided, which ensures that body 40 cannot disengage from the lower cup once snap-coupled therewith.

Also, the lower cup has a cylindrical wall 46 whereon bayonet-type reliefs for the double-bayonet engagement with the corresponding opening/seat of the accumulator are formed. In the upper part the cup has a preferably notched locking ring 45, beneath which an annular gasket 47 is arranged, intended to seal against the edge of the accumulator seat.

Between the cup and plug body 40 a toroidal gasket O, such as an O-ring, is preferably arranged, which ensures a more stable coupling between these two parts.

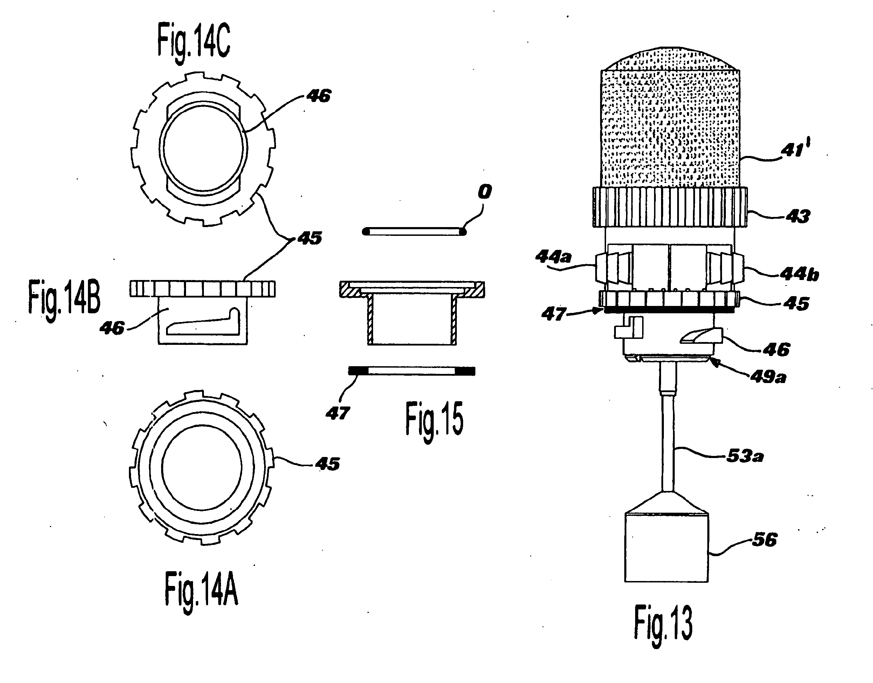

Figs. 14A-14C and 15 show various views of the cup according to the invention.

The snap mounting between plug body 40 and the underlying coupling cup in the accumulator seat allows to easily enclose between them connections 42a and 42b for water inflow and outflow, thereby guaranteeing the free orientation thereof. As a matter of fact, the opportunity to freely orientate the two connections 42a and 42b is important for the connection of the various plugs of a battery, as will be shown below.

A second advantageous result is that of maintaining the plug unconstrained in rotation from the cup. This is useful during the final assembly phase, as will be shown further on.

Fig. 13 shows instead a dome-shaped cap according to the invention. All the components are identical to the ones described above, except for the upper part of the plug. As a matter of fact, above flange 43 of body 40 only a dome-shaped filter 41', known per se, is applied. The connection of filter 41' to flange 43 may be obtained by the method indicated above, here too exploiting three cylindrical cusp-shaped directrices to promote welding.

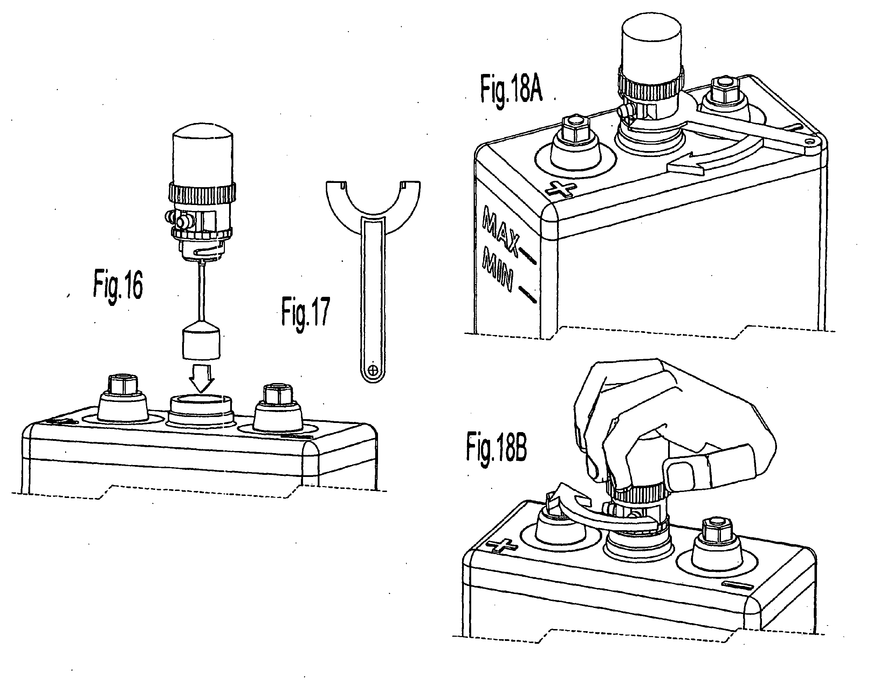

Fig. 16 shows the way of introduction of a plug according to the invention into the seat of an accumulator element.

Once the plug has been introduced into the suitable housing, it is provided to fully tighten the double-bayonet cup part, acting on locking ring 45. Due to the notches obtained on locking ring 45, it is possible to perform the tightening with the help of a suitable key (fig. 18A), also of plastic material, such as the one shown in fig. 17. The tightening occurs by screwing locking ring 45 in a clockwise direction, until adequate compression of gasket 47 on the mouth of the housing seat is accomplished, so as to guarantee a good seal.

Thereby, the plug is securely fastened to the battery element, but the upper part - due to the snap coupling with the cup part - maintains the ability to rotate with respect to the accumulator seat: it can therefore be acted upon to orient the plug manually (Fig. 18B) and to arrange connections 44a and 44b on the side providing easiest access for the subsequent connection operation.

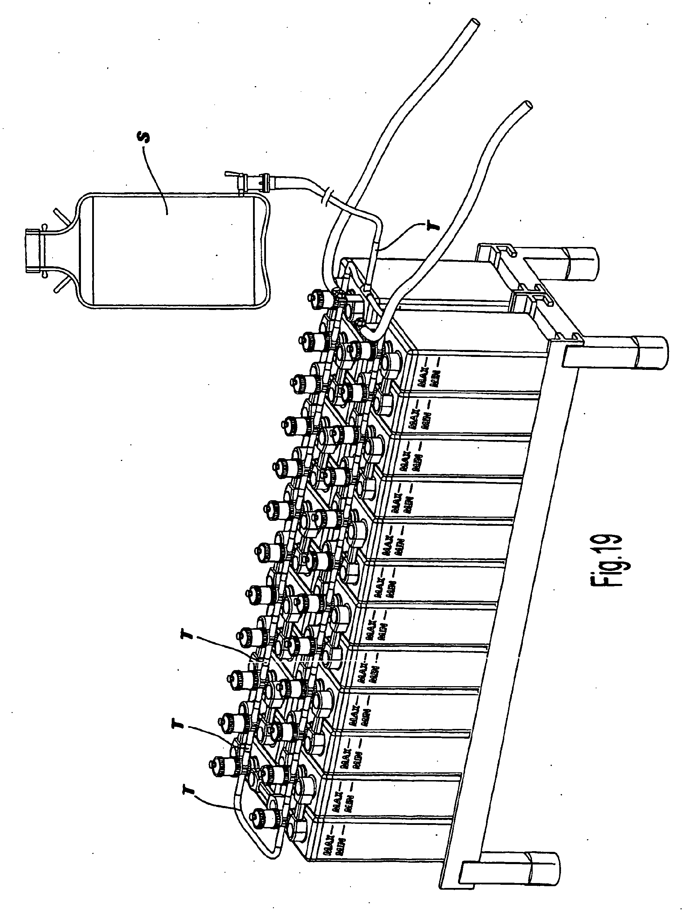

All adjacent connections are put in communication by small connecting pipes T (fig. 19), so as to connect in series all the topping up bowls V of the individual plugs of the various battery elements.

Thereby a system of pressurised communicating vessels is created. The communicating vessels are indeed the accumulator elements. Circuit pressure is determined by the piezometric height of a storage tank S of the topping up liquid (distilled water) whereto the system is connected.

Evidently, tank S may be positioned in a desired, easily accessible location.

As can be understood, therefore, with the above-described plug the objects set forth in the preliminary remarks may be achieved. As a matter of fact, a filter plug has been provided, either cylindrical or dome-shaped, which does not require awkward or time-consuming operations to perform the topping up, but which simply requires to keep the piezometric level of an easily-accessible single tank up-to-date.

There is hence no need for continuous support for the visual monitoring of the electrolyte level in all the elements forming the electric accumulator. This determines a reduced presence of the operator and a resulting increased safety of maintenance personnel.

Finally, the specific configuration and construction ensures a general inexpensiveness and ease of assembly.

However, it is understood that protection of the above-described invention is not limited to the particular embodiments shown, but extends to any other equivalent construction variant as defined in the attached claims.

## Claims

1. Venting plug for stationary batteries, of the type comprising a support body, which may be screwed into an upper opening of a battery element, provided with at least one topping-up hole intended to cause an electrolyte topping-up liquid to precipitate into the battery element which liquid is introduced into the upper part of said support body, and further comprising a porous element, mounted in the upper part of said support body, intended to act as a filtering barrier for the gases which rise up from said battery element towards the outside along said topping-up hole, **characterised in that** said support body has inside a topping-up bowl, communicating with two inlet and outlet connections, provided with an upwardly-protruding conduit which opens below the bowl into an outlet nozzle, and **in that** below the bowl there is provided a hermetic closing element of said nozzle controlled by a float assembly which leads said closing element to obstruct said nozzle when the electrolyte level lies above a preset operational level.

2. Venting plug for stationary batteries as claimed in claim 1), wherein a lower cup provided with coupling means intended to cooperate with similar coupling means in the upper opening of the battery element is further provided, said cup being apt to be snap-coupled with the support body, so as to define a mutual axial constraint, but free mutual rotation.

3. Venting plug for stationary batteries as claimed in claim 2), wherein said inlet and outlet connections may be oriented and are rotatably sandwiched between an upper flange portion and a lower flange portion, to be moved closer to each other during mounting, the upper one integral with the support body and the lower one integral with the lower cup.

4. Venting plug for stationary batteries as claimed in claim 3), wherein said lower flange is part of a locking ring of the lower cup.

5. Venting plug for stationary batteries as claimed in claim 4), wherein said locking ring is provided with a notched surface which may be coupled with a respective tightening key.

6. Venting plug as claimed in any one of the preceding claims, wherein said porous element is shaped as a hollow ceramic body, hot-pressure-welded on a support portion of the plug body.

7. Venting plug as claimed in claim 6), wherein said support portion of plastic material has a plurality of circumferential and concentric ridges apt to enter, in a heated condition, the ceramic material.

8. Topping-up assembly for a stationary battery, comprising a plurality of plugs as claimed in any one of the preceding claims, **characterised in that** each plug is connected with two adjacent plugs by pipes leading to said inlet and outlet connections, respectively, the circuit comprising said plugs and relative pipes further being connected to a topping-up liquid tank apt to establish a desired piezometric height of topping-up liquid for said circuit.

## Patentansprüche

1. Belüftungsstecker für stationäre Batterien vom Typ mit einem Trägerkörper, der in eine obere Öffnung eines Batterieelements schraubbar ist, mit mindestens einer Auffüllbohrung versehen ist, um eine Elektrolytauffüllflüssigkeit in das Batterieelement abfallen zu lassen, wobei die Flüssigkeit in den oberen Teil des Trägerkörpers eingeführt wird, und ferner mit einem porösen Element, das in dem oberen Teil des Trägerkörpers montiert ist, um als eine Filtersperre für die Gase zu fungieren, die aus dem Batterieelement nach außen entlang der Auffüllbohrung aufsteigen, **dadurch gekennzeichnet, dass** der Trägerkörper innen einen Auffüllkopf aufweist, der mit zwei Einlass- und Auslassanschlüssen in Verbindung steht, mit einem nach oben vorragenden Rohr versehen ist, das unter dem Kopf in einer Auslassdüse mündet, und dass unter dem Kopf ein hermetisches Verschlusselement der Düse vorgesehen ist, das von einer Schwimmeranordnung gesteuert wird, die das Verschlusselement zum Versperren der Düse bringt, wenn der Elektrolytpegel oberhalb eines festgelegten Betriebspegels liegt.

2. Belüftungsstecker für stationäre Batterien nach Anspruch 1, bei dem ferner ein unterer Becher vorgesehen ist, der mit Kopplungsmitteln zum Kooperieren mit ähnlichen Kopplungsmitteln in der oberen Öffnung des Batterieelements versehen ist, wobei der Becher gestaltet ist, um mit dem Trägerkörper durch eine Schnappkopplung verbunden zu werden, um eine wechselseitige axiale Beschränkung, aber eine freie wechselseitige Drehung zu definieren.

3. Belüftungsstecker für stationäre Batterien nach Anspruch 2, wobei besagte Einlass- und Auslassanschlüsse ausgerichtet werden können und zwischen einem oberen Flanschabschnitt und einem unteren Flanschabschnitt drehbar sandwichartig angeordnet sind, um während der Montage näher zueinander bewegt zu werden, wobei der obere integral mit dem Trägerkörper und der unter integral mit dem unteren Becher ausgebildet ist.

4. Belüftungsstecker für stationäre Batterien nach Anspruch 3, wobei der untere Flansch Teil eines Sicherungsrings des unteren Bechers ist.

5. Belüftungsstecker für stationäre Batterien nach Anspruch 4, wobei der Sicherungsring mit einer gekerbten Oberfläche versehen ist, die mit einem entsprechenden Anziehschlüssel gekoppelt werden kann.

6. Belüftungsstecker nach einem der vorangehenden Ansprüche, wobei das poröse Element die Form eines hohlen Keramikkörpers aufweist, der an einen Trägerabschnitt des Steckerkörpers warmpreßgeschweißt ist.

7. Belüftungsstecker nach Anspruch 6, wobei der Trägerabschnitt aus Kunststoffmaterial mehrere kreisumfängliche und konzentrische Erhöhungen aufweist, die geeignet sind, um in einem erwärmten Zustand in das Keramikmaterial einzutreten.

8. Auffüllanordnung für eine stationäre Batterie, umfassend eine Vielzahl von Steckern nach einem der vorangehenden Ansprüche, **dadurch gekennzeichnet, dass** jeder Stecker mit zwei benachbarten Steckern durch Rohre verbunden ist, die zu den Einlass- bzw. Auslassanschlüssen führen, wobei der Kreislauf mit den Steckern und dazugehörigen Rohren ferner mit einem Aufftillflüssigkeitstank verbunden ist, der geeignet ist, um eine gewünschte piezometrische Höhe von Auffüllflüssigkeit für besagten Kreislauf herzustellen.

## Revendications

1. Bouchon d'aération pour batteries stationnaires, du type comprenant un corps de support, qui peut être vissé dans une ouverture supérieure d'un élément de batterie, prévu avec au moins un trou de remplissage pour entraîner la précipitation d'un liquide électrolytique de remplissage dans l'élément de batterie lequel liquide est introduit dans la partie supérieure dudit corps de support, et comprenant en outre un élément poreux, monté dans la partie supérieure dudit corps de support, pour faire office de barrière de filtrage pour les gaz qui montent dudit élément de batterie vers l'extérieur le long dudit trou de remplissage, **caractérisé en ce que** ledit corps de support a à l'intérieur un bol de remplissage, qui communique avec deux raccordements d'entrée et de sortie, doté d'un conduit faisant saillie vers le haut qui débouche sous le bol dans une buse de sortie, et **en ce que** sous le bol on prévoit un élément pour fermer hermétiquement ladite buse commandé par un ensemble flotteur qui amène ledit élément de fermeture à obturer ladite buse lorsque le niveau de l'électrolyte dépasse un niveau opérationnel prédéfini.

2. Bouchon d'aération pour batteries stationnaires tel que revendiqué dans la revendication 1, dans lequel on prévoit en outre une coupelle inférieure dotée de moyens d'accouplement destinés à coopérer avec des moyens d'accouplement similaires dans l'ouverture supérieure de l'élément de batterie, ladite coupelle étant apte à avoir un accouplement par pression avec le corps de support, de sorte à définir une contrainte axiale mutuelle, mais sans rotation mutuelle.

3. Bouchon d'aération pour batteries stationnaires tel que revendiqué dans la revendication 2, dans lequel les raccordements d'entrée et de sortie peuvent être orientés et sont pris en sandwich en étant rotatifs entre une partie supérieure de bride et une partie inférieure de bride, pour se rapprocher l'un de l'autre lors du montage, la partie supérieure étant solidaire du corps de support et la partie inférieure étant solidaire de la coupelle inférieure.

4. Bouchon d'aération pour batteries stationnaires selon la revendication 3, dans lequel ladite bride inférieure fait partie d'une bague de verrouillage de la coupelle inférieure.

5. Bouchon d'aération pour batteries stationnaires tel que revendiqué dans la revendication 4, dans lequel ladite bague de verrouillage est dotée d'une surface encochée qui peut être accouplée à une clé de serrage respective.

6. Bouchon d'aération tel que revendiqué dans l'une quelconque des revendications précédentes, dans lequel ledit élément poreux est formé comme un corps en céramique creux, soudé sous pression à chaud sur une partie de support du corps de bouchon.

7. Bouchon d'aération tel que revendiqué dans la revendication 6, dans lequel ladite partie de support en matériau en plastique présente une pluralité de crêtes circonférentielles et concentriques aptes à rentrer, dans l'état chauffé, dans le matériau céramique.

8. Ensemble de remplissage pour batterie stationnaire, comprenant une pluralité de bouchons tel que revendiqué dans l'une quelconque des revendications précédentes, **caractérisé en ce que** chaque bouchon est relié à deux bouchons adjacents par des tuyaux menant auxdits raccordements d'entrée et de sortie, respectivement, le circuit comprenant le fait que lesdits bouchons et des tuyaux relatifs étant en outre reliés à un réservoir de liquide de remplissage apte à établir une hauteur piézométrique désirée du liquide de remplissage pour ledit circuit.
